# EUROPEAN PATENT APPLICATION

(11) **EP 2 876 003 A1**
(43) Date of publication of application: **27.05.2015**
(21) Application number: 13194314.4
(22) Date of filing: 25.11.2013
(51) Int. Cl.: B60R 21/2346

(54) **Airbag**

(71) Applicant: Autoliv Development AB, 447 83 Vårgårda (SE)
(72) Inventor: Magnusson, Ulf, SE-44157 Alingsås (SE); Mazanek, Jan, SE-42750 Billdal (SE); Johansson, Jack, SE-43832 Landvetter (SE); Lindberg, Ken, SE-44146 Alingsås (SE)
(74) Representative: Parry, Simon James

(57) **Abstract**

There is disclosed an airbag (11) for a motor vehicle safety device. The airbag has an inflatable chamber (29) defined between a front layer (12) a rear layer (13) of flexible material, and has an inlet region (30) within which there is provided an inlet aperture (32) for the supply of inflating gas into the inflatable chamber (29). The airbag further includes a flexible gas guide (24) located inside the inlet region (30) and between the front and rear layers (12, 13) of the airbag, the gas guide (24) defining a conduit for the passage of inflating gas, and being connected to at least one of said layers (12, 13).

## Description

The present invention relates to an airbag, and more particularly relates to an airbag for a motor vehicle safety arrangement.

It is now very widely known to provide airbags in motor vehicles to provide protection to the occupants of the vehicle in the event of an accident, and more recently also to provide airbags arranged to inflate over a region of the outside of a vehicle in order to provide protection to pedestrians in the event that they are stuck by the vehicle. Airbags of all types have become rather sophisticated over the years, and many now have particular and somewhat complicated shapes dictated by their specific function, their required inflation characteristics, and the shape and configuration of the part of the vehicle to which they are to be mounted or into which they are intended to inflate.

Airbags have an inlet, which is typically connected directly to an inflator such as a gas generator, and which permits the inflow of inflating gas from the inflator to inflate the airbag. Such inflators are configured to produce a large volume and aggressive flow of inflating gas, and so the forces applied to the region of the airbag in which the inlet is provided are usually extremely high.

It has been found for some airbags that the requisite shape and configuration of the inlet region of the airbag (as dictated, for example, by the mounting position of the inflator within the vehicle relative to the deployed position of the airbag) can cause undesirably high stresses to be created in the inlet region of the airbag, which can represent a point of weakness and potential damage or rupture.

This problem can be particularly troublesome in the case of airbags having a sharply curved or angled seam in the vicinity of the inlet region, and hence adjacent the point at which the inflating gas is directed into the airbag.

It is an object of the present invention to provide an improved airbag.

According to the present invention, there is provided an airbag for a motor vehicle safety arrangement, the airbag having an inflatable chamber defined between a front layer and a rear layer of flexible material, and further having an inlet region within which there is provided an inlet aperture for the supply of inflating gas into the inflatable chamber, the airbag being characterised by the provision of a flexible gas guide located inside the inlet region and between the front and rear layers of the airbag, the gas guide defining a conduit for the passage of inflating gas, and being connected to at least one of said layers.

The gas guide may be connected to both of said layers.

Advantageously, the connection between the gas guide and the or each said layer is effective to control the shape of the inlet area of the airbag upon inflation of the airbag.

Conveniently, the gas guide is connected to the or each layer via a respective guide seam.

Advantageously, the gas guide is connected to the or each said layer via a flexible tether extending between the gas guide and the respective layer.

The or each said tether may be connected to the respective layer by a respective said guide seam.

Conveniently, said front and rear layers are interconnected by a peripheral seam, the seam having a re-entrant corner in the inlet region of the airbag, and wherein the gas guide is connected to the or each layer at a position adjacent the re-entrant corner.

Advantageously, the or each guide seam extends along a line approximately orthogonal to the bisector of said re-entrant corner.

Conveniently, the or each tether is elongate along a line approximately orthogonal to the bisector or said re-entrant corner.

The gas guide may be of a Y-shaped configuration, having a single inlet port and two outlet ports.

Conveniently, part of the gas guide fits around the re-entrant corner of the peripheral seam.

The or each said tether may be formed from the same material as said front and rear layers.

Said gas guide may be formed from the same material as said front and rear layers.

Advantageously, said front and rear layers are formed from woven fabric.

Conveniently, the or each said seam is a stitched seam.

Part of said gas guide may be implicated in said peripheral seam.

So that the invention may be more readily understood, and so that further features thereof may be appreciated, embodiments of the invention will now be described by way of example with reference to the accompanying drawings in which:
Figure 1 is a plan view from above, showing a prior art airbag, in an inflated condition;
Figure 2 is a plan view showing an initial stage in the production of an airbag in accordance with the present invention, illustrating two superimposed sheets of flexible material;

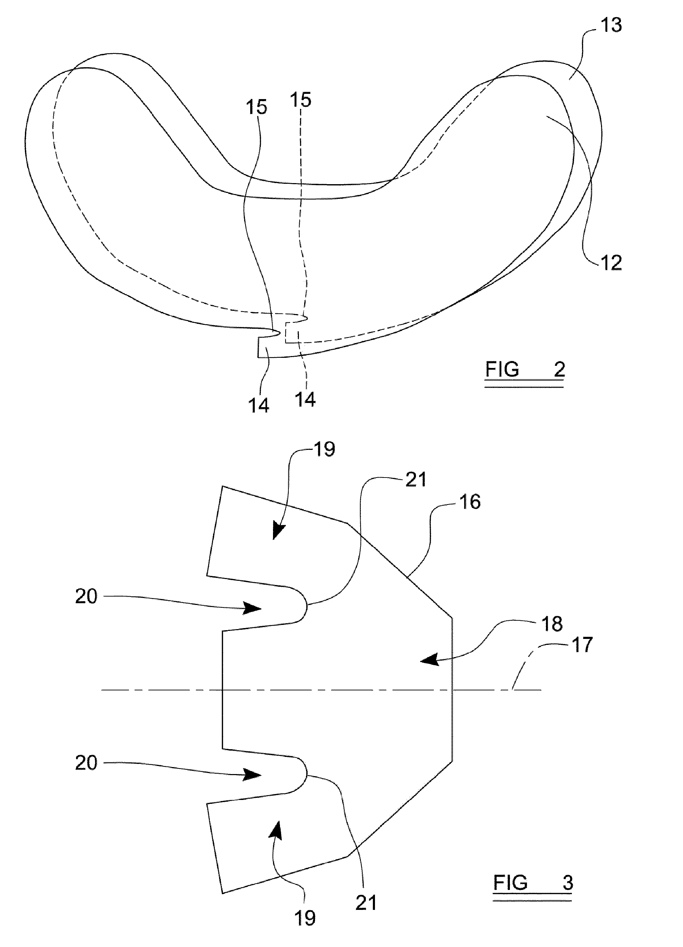

Figure 2 is a plan view showing an additional piece of flexible material, which is used to form a gas guide for an inlet region of the airbag;
Figure 3 illustrates the piece of flexible material of Figure 3 folded in half and stitched to form the gas guide;

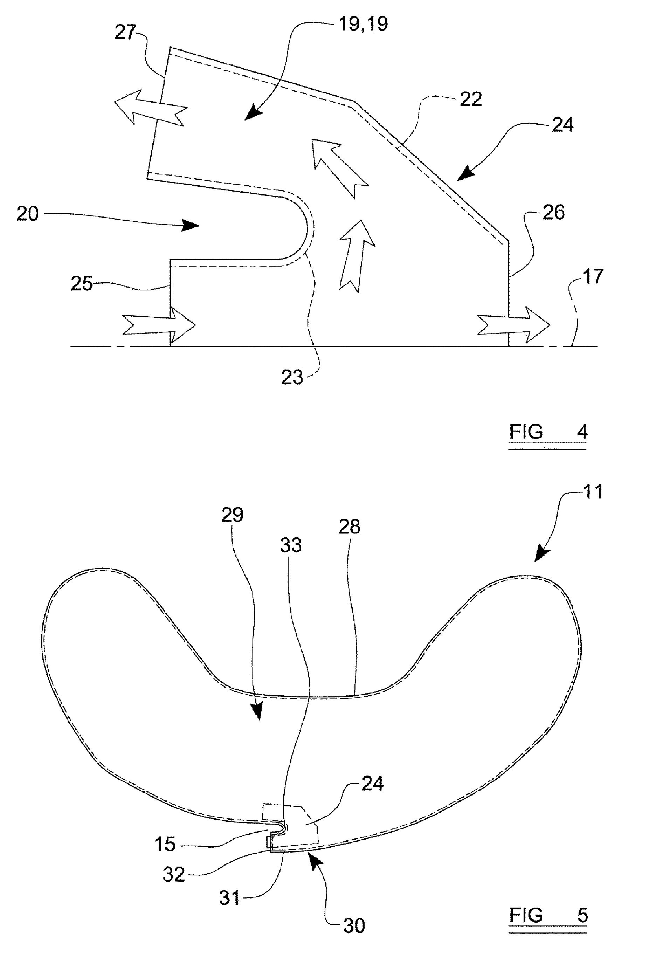

Figure 4 is a view corresponding generally to that of figure 2, showing the superimposed sheets connected around their peripheral edges to define an inflatable chamber, with the gas guide therebetween in an inlet region of the airbag;

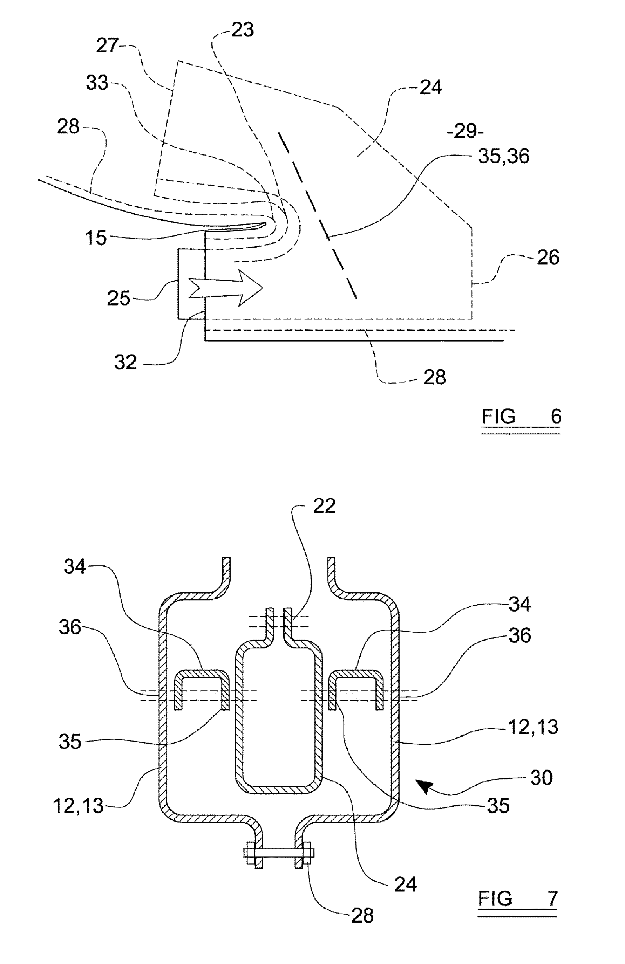

Figure 6 is an enlarged view showing the inlet region of the airbag with the gas guide therein;
Figure 7 is a schematic cross-sectional view through the gas guide and inlet region of the airbag; and

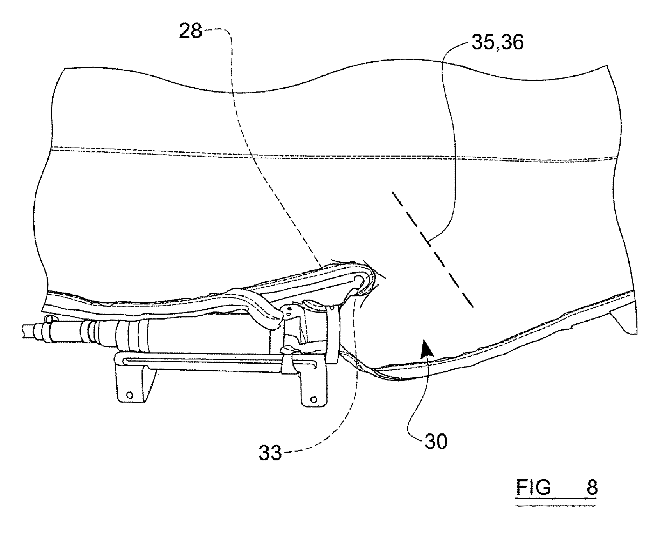

Figure 8 is a view showing the inlet region of the airbag in an inflated condition.

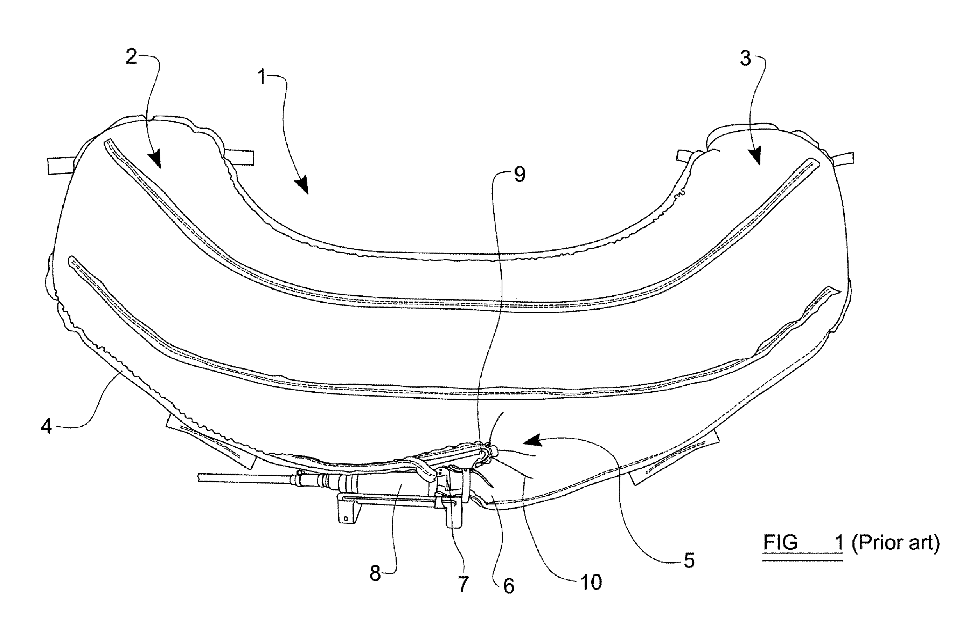

Turning now to consider the drawings in more detail, figure 1 shows a prior art airbag 1 in an inflated condition. The particular airbag 1 illustrated is a so-called pedestrian airbag of a type which is intended to inflate from underneath the rear part of the hood or bonnet of a motor vehicle so as to deploy over the vehicle's windscreen to protect a pedestrian in the event that the pedestrian is struck by the vehicle. Such airbags are known, and the airbag 1 illustrated has a typical configuration for such purpose, being generally elongate but somewhat arcuate so that each end region 2, 3 of the airbag provides extra protection over the A-pillars of the vehicle when deployed. The airbag of the present invention will be described below in detail with specific reference to a pedestrian airbag of this general type, although it is to be appreciated that the invention is not restricted to pedestrian airbags and could be embodied in airbags of other types and configurations, such as driver airbags, passenger airbags, and side curtain airbags of a type configured deploy across the side windows of a motor vehicle. The pedestrian airbag 1 illustrated is merely exemplary.

As is conventional, the airbag 1 comprises two sheets or layers of flexible fabric which are interconnected along their peripheral edges by a peripheral seam 4 to define an inflatable chamber therebetween. The airbag 1 has an inlet region, indicated generally at 5, which includes a necked part 6 defining an inlet aperture 7. The airbag is shown with an inflator 8, such as a gas generator, installed within the inlet aperture 7. The inflator 8 is configured to generate a large volume of inflating gas, and to direct the gas into the inflatable chamber of the airbag via the inlet region 5 in order to inflate the airbag into the configuration shown in figure 1.

As will also be noted, the peripheral seam 4 of the airbag defines a re-entrant corner 9 having a tight radius adjacent the neck 6 of the airbag. This type of configuration is common in airbags of the pedestrian and side-curtain type, which are typically tightly rolled prior to deployment along a roll axis which is generally parallel to the longitudinal axis of the inflator 8. This type of arrangement allows the initially rolled airbag and the inflator 8 to be aligned and hence mounted within a very small space in the motor vehicle: for example beneath the rear part of the hood or bonnet in the case of a pedestrian airbag, and in the roof lining of the vehicle in the case of a side-curtain. However other types of airbag may also have a similar necked configuration with a tightly radiused re-entrant peripheral edge.

Problems can arise when an airbag of the type described above and shown in figure 1 is inflated. In particular, the tightly radiused re-entrant corner 9 of the peripheral seam 4 can become highly stressed under the rapid and aggressive flow of inflating gas into the airbag. This is evidenced by the creation of prominent creases 10 in the inlet region 5 of the airbag, the creases radiating from the re-entrant corner 9 of the peripheral seam.

Turning now to consider figures 2 to 8, an airbag 11 in accordance with the present invention will be described.

Figure 2 shows a pair of substantially identical primary sheets of flexible material 12, 13 from which the airbag 11 (shown in figure 5) is produced. It is to be appreciated that whilst those of skill in the art will recognise the airbag 11 as being of a configuration suitable for use as a pedestrian airbag for inflation over part of the windscreen of a motor vehicle, as indicated above this type of airbag is only exemplary and the invention is not limited to pedestrian airbags.

The sheets 12, 13 are preferably formed from woven fabric material and in the pedestrian airbag embodiment illustrated are both elongate and somewhat arcuate. The sheets 12, 13 are shown in figure 2 in superimposed relation to one another. As will be noted, each sheet is shown provided with an outwardly projecting tab 14 at a generally central position along one of its sides, the tabs 14 being partly defined by the presence of respective adjacent re-entrant corners 15 formed in the side edges of the sheets 12, 13.

Figure 3 shows a secondary sheet of fabric 16, which in preferred embodiments is also woven fabric material and may be identical to the material of the primary sheets 12, 13. The secondary sheet 16 is mirror symmetrical about an axis 17 and has a shape which resembles a blunt arrowhead, having a generally rectangular central region 18, and a pair of projecting wings 19. As will be noted, the wings 19 are each spaced from the central region 18 of the sheet by respective re-entrant recesses 20, with each recess 20 having a rounded innermost corner 21. The rounded corners 21 of the recesses 20 have a radius which is slightly greater than the radius of the re-entrant corners 15 formed in the side edges of the primary sheets 12, 13 shown in figure 2.

Figure 4 shows the secondary sheet 16 folded about its axis of symmetry 17 such that the two wings 19 become superimposed. The superimposed layers of the sheet are then interconnected by two discrete seams 22, 23, both of which may take several forms, but may be stitched seams. The first seam 22 is created along the long cranked edge of the superimposed wings 19, and the second seam 23 is formed around the recesses 20. When the seams 22, 23 are created in this manner, the folded secondary sheet 16 creates a generally Y-shaped gas guide 24 defining a conduit having a single inlet port 25 at one end of the central region 18, a first outlet port 26 at the opposite end of the central region 18, and a second outlet port 27 formed between the two superimposed wings 19. The gas guide 24 thus permits the inflow of gas through the inlet port 25, whereupon the flow will be bifurcated into a first outflow through the first outlet port 26, and a second outflow through the second outlet port 27, as indicated schematically by the arrows in figure 4.

Turning now to consider figure 5 in more detail, the two superimposed primary sheets 12, 13 are interconnected along substantially the entire extent of their aligned peripheral edges by a peripheral seam 28 to define an inflatable chamber 29 between the sheets for the receipt of inflating gas. In this interconnected configuration the sheets 12, 13 define, respectively, a front layer and a rear layer of fabric. In a similar manner to the prior art airbag shown in figure 1, the resulting airbag 11 has an inlet region 30. More particularly, it will be noted that the peripheral seam begins at the lower corner (in the orientation shown) of the aligned tabs 14, runs around the periphery of the sheets 12, 13, continues around the re-entrant corners 15 of the sheets 12, 13, and terminates at an opposite corner of the aligned tabs 14. The tabs 14 are thus unconnected along their aligned free edges and so cooperate to define an open neck 31 to the airbag, the neck 31 defining a gas inlet aperture 32 to the airbag. In a similar manner to the prior art airbag illustrated in figure 1, the neck 31 is intended to receive an inflator such as a gas generator (not shown in figure 5).

As will therefore be appreciated, because the peripheral seam 28 extends around the aligned re-entrant corners 15 of the sheets 12, 13, the seam 28 itself has a re-entrant corner 33 in the inlet region 30 of the airbag 11.

Importantly, it is to be noted that the gas guide 24 shown in figure 4 is located inside the inlet region 30 of the airbag 11, between the two sheets 12, 13 as shown in more detail in figure 6. As illustrated, the aligned re-entrant recesses 20 of the gas guide 24 fit around the re-entrant corner 33 of the peripheral seam 28, such that the corner of the seam is between the inlet port 25 and the second outlet port 27 of the gas guide 24. In the particular arrangement illustrated in figure 6, the inlet port 25 of the gas guide projects a short distance from the inlet aperture 32 of the inflatable chamber 29 of the airbag.

Although not illustrated in figure 6, the lower edge region of the gas guide 24 (in the orientation illustrated) can be implicated in the adjacent region of the peripheral seam 28 to fix the gas guide 24 in position relative to the sheets 12, 13 in the inlet region 30.

An inflator generally similar to the one illustrated in figure 1 can be inserted into the gas guide 24 via the inlet port 25 such that it will direct a flow of inflating gas into the gas guide 24 upon actuation. As will be appreciated from the arrows in figure 4, and discussed above, the gas guide 24 thus serves to bifurcate the flow of inflating gas from its inlet port 25 into two streams which exit the gas guide through respective outlet ports 26, 27 and into the inflatable chamber 29 of the airbag 11 to inflate the airbag. Because the outlet ports 26, 27 are oppositely directed, the gas guide thus serves as a deflector which is effective to direct the inflating gas into opposite ends of the airbag 11 to give a relatively even inflation characteristic along the length of the airbag.

Additionally, it is to be noted that the gas guide 24 is connected to both of the primary sheets 12, 13 in the inlet region 30 of the airbag, although in other embodiments it is envisaged that the gas guide may only be connected to one of the primary sheets. In more detail, and having regard to figure 7 as well as figure 6, the gas guide 24 is connected to each sheet 12, 13 via a respective small tether wall 34. Each tether wall 34 is formed from flexible material, such as the same fabric as the primary sheets 12, 13 and the gas guide 24, and as shown in figure 7 is arranged between a respective side of the gas guide 24 and the adjacent sheet 12, 13 in the inlet region 30 of the airbag. The tether walls 34 may each be of simple rectangular form and are each connected to the gas guide 24 by a first elongate guide seam 35 and to the adjacent sheet 12, 13 by a second elongate guide seam 36. The guide seams 35, 36 can take various forms, but may be simple stitched seams. As illustrated in figure 6, the guide seams 35, 36 are each elongate along a line which is generally adjacent the re-entrant corner 33 of the peripheral seam 28 of the airbag, and which is approximately orthogonal to the bisector of the re-entrant corner 33. It will thus be noted that the guide seams 35, 36 each make an acute angle to the inflow direction of gas from the inlet port 25 of the gas guide 24.

As illustrated in figure 7, which shows the inlet region 30 of the airbag 11 and the gas guide 24 both somewhat inflated, the tether walls 34 thus extend between the gas guide and a respective sheet 12, 13 of the airbag. Having regard to figure 6, it will also be appreciated that the tether walls 34 are elongate along the lines defined by the guide seams 35, 36 and are hence also approximately orthogonal to the bisector of the re-entrant corner 30 of the peripheral seam 28.

Upon inflation of the airbag 11, the inlet region 30 of the airbag will initially become inflated. During this inflation the tether walls 34 will become tensioned between the gas guide 24 and the adjacent sheets 12, 13. This controls the shape of the inlet area 30 as the airbag inflates, preventing the inlet regions of the sheets 12, 13 from moving a long way from the sides of the gas guide 24. The tether walls 34 thus serve to limit the thickness of the inlet region 30 of the airbag upon inflation, which in turn reduces the high stresses which would otherwise be applied to the re-entrant corner 33 of the peripheral seam 28. As shown in figure 8, there are fewer, and less prominent, creases radiating from the re-entrant corner 33 of the peripheral seam 28.

It is to be noted that in variants of the invention, it might be possible to eliminate the tether walls 34 between the gas guide 24 and the adjacent sheets 12, 13 of the airbag, and instead simply connect the gas guide directly to the sheets 12, 13 by respective seams along a similar path to those shown in figure 6 for the guide seams 25, 36.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

## Claims

1. An airbag (11) for a motor vehicle safety device, the airbag (11) having an inflatable chamber (29) defined between a front layer (12) a rear layer (13) of flexible material, and further having an inlet region (30) within which there is provided an inlet aperture (32) for the supply of inflating gas into the inflatable chamber (29), the airbag being **characterised by** the provision of a flexible gas guide (24) located inside the inlet region (30) and between the front and rear layers (12, 13) of the airbag, the gas guide (24) defining a conduit for the passage of inflating gas, and being connected to at least one of said layers (12, 13).

2. An airbag according to claim 1, wherein the gas guide (24) is connected to both of said layers (12, 13).

3. An airbag according to claim 1 or claim 2, wherein the connection between the gas guide (24) and the or each said layer (12, 13) is effective to control the shape of the inlet area (30) of the airbag (11) upon inflation of the airbag.

4. An airbag according to any preceding claim, wherein the gas guide (24) is connected to the or each layer (12, 13) via a respective guide seam (35, 36).

5. An airbag according to any preceding claim, wherein the gas guide (24) is connected to the or each said layer (12, 13) via a flexible tether (34) extending between the gas guide (24) and the respective layer (12, 13).

6. An airbag according to claim 5 as dependent upon claim 4, wherein the or each said tether (24) is connected to the respective layer (12, 13) by a respective said guide seam (25, 36).

7. An airbag according to any preceding claim, wherein said front and rear layers (12, 13) are interconnected by a peripheral seam (28), the seam (28) having a re-entrant corner (33) in the inlet region (30) of the airbag, and wherein the gas guide (24) is connected to the or each layer (12, 13) at a position adjacent the re-entrant corner (33).

8. An airbag according to claim 7 as dependent upon claim 4, wherein the or each guide seam (35, 36) extends along a line approximately orthogonal to the bisector of said re-entrant corner (33).

9. An airbag according to claim 7 as dependent upon claim 5, wherein the or each tether (34) is elongate along a line approximately orthogonal to the bisector or said re-entrant corner (33).

10. An airbag according to any preceding claim, wherein the gas guide (24) is of a Y-shaped configuration, having a single inlet port (25) and two outlet ports (26, 27).

11. An airbag according to claim 10, as dependent upon claim 7, wherein part (20) of the gas guide (24) fits around the re-entrant corner (33) of the peripheral seam (28).

12. An airbag according to claim 5, wherein the or each said tether (34) is formed from the same material as said front and rear layers (12, 13).

13. An airbag according to any preceding claim, wherein said gas guide (24) is formed from the same material as said front and rear layers (12, 13).

14. An airbag according to any preceding claim, wherein said front and rear layers (12, 13) are formed from woven fabric.

15. An arrangement according to any preceding claim, wherein part of said gas guide (24) is implicated in said peripheral seam (28).
